# FASCICULE DE BREVET EUROPEEN

(11) **EP 3 902 668 B1**
(45) Date de publication et mention de la délivrance du brevet: **08.02.2023**
(21) Numéro de dépôt: 19831608.5
(22) Date de dépôt: 12.12.2019
(51) Int. Cl.: B29D 30/06, B29C 33/30

(54) **PROCÉDÉ DE FABRICATION D'UN ÉLÉMENT DE MOULE POUR MOULE DE PNEUMATIQUE**
VERFAHREN ZUR HERSTELLUNG EINES FORMTEILS FÜR EINE REIFENFORM
METHOD FOR MANUFACTURING A MOULD ELEMENT FOR A TYRE MOULD

(30) Priorité: 26.12.2018 FR 1874148
(43) Date de publication de la demande: 03.11.2021
(73) Titulaire: COMPAGNIE GENERALE DES ETABLISSEMENTS MICHELIN, 63000 Clermont-Ferrand (FR)
(72) Inventeur: TANGUY, Didier, 63040 Clermont-Ferrand Cedex 09 (FR); LEPRETRE, Jérôme, 63040 Clermont-Ferrand Cedex 09 (FR)
(74) Mandataire: Noel, Luminita
(86) Numéro de dépôt international: PCT/EP2019/084844
(87) Numéro de publication internationale: WO 2020/136015

(56) Documents cités:
- JP-A- 2000 102 925
- JP-A- 2000 102 926

## Description

La présente invention concerne le domaine général des moules de cuisson ou vulcanisation pour pneumatiques de véhicules.

Plus particulièrement, la présente invention concerne un élément de moule destiné à être utilisé dans ce type de moule.

Classiquement, un moule de cuisson comprend deux coquilles latérales assurant chacune le moulage d'un des flancs latéraux du pneumatique, et une pluralité de secteurs assurant le moulage de la bande de roulement dudit pneumatique. Les coquilles et les secteurs définissent un espace intérieur destiné à être mis en contact avec l'ébauche du pneumatique non vulcanisée.

Pour mouler la bande de roulement du pneumatique, les secteurs du moule comprennent des éléments de garniture généralement réalisés en aluminium. Par « élément de garniture », on entend une partie du moule qui comporte une surface de moulage permettant de mouler au moins une partie de la surface de roulement de la bande de roulement et les sculptures de cette bande de roulement.

Pour fabriquer ces éléments de garniture, une solution consiste à utiliser une matrice en matériau friable, par exemple en plâtre, qui intègre des lamelles en aluminium destinées à former les sculptures de la bande de roulement du pneumatique. Les lamelles sont noyées à l'intérieur de la matrice à l'exception de parties d'extrémité ou pieds qui demeurent en saillie. On vient couler de l'aluminium sur la matrice pour former l'élément de garniture. Les lamelles de la matrice sont ancrées dans l'élément de garniture lors du moulage de celui-ci. Ensuite, il est nécessaire de procéder à la destruction de la matrice pour libérer les lamelles et l'élément de garniture.

Ce type de matrice a pour inconvénient majeur d'être à usage unique, ce qui n'est pas écologique. En outre, il en faut environ une douzaine (par exemple de huit à vingt-quatre) pour fabriquer la totalité d'un moule de pneumatique, et il est parfois nécessaire de fabriquer plusieurs fois les mêmes matrices, que l'on détruit, lorsqu'il faut faire plusieurs moules identiques.

Pour fabriquer des éléments de garniture par moulage d'aluminium, une autre solution consiste à utiliser une matrice en acier qui est usinée au préalable par électroérosion par enfonçage, ou par fraisage, ou encore par un procédé combinant ces deux technologies. Toutefois, les électrodes pour l'électroérosion par enfonçage classiquement utilisées limitent la complexité des formes pouvant être usinées et donc la complexité des sculptures de pneumatique pouvant être ensuite fabriquées. Au surplus, il faut également prévoir des formes relativement simples sur la matrice en acier de sorte à pouvoir ensuite démouler l'aluminium injecté.

Par ailleurs, indépendamment du type de matrice utilisée pour la fabrication, il n'est pas possible de réaliser des textures de petites dimensions sur les éléments de garniture en aluminium, visant par exemple à obtenir des marquages particuliers sur les pneumatiques moulés, dans la mesure où de telles textures en aluminium ne sont pas résistantes à des milliers de cuisson de pneumatiques ou encore aux opérations de nettoyage du moule.

La présente invention vise à remédier à ces inconvénients. Le document de brevet JP 2000 102925 A divulgue un procédé de fabrication d'un élément de nervure de moule pour un moule de pneu.

La présente invention concerne un procédé de fabrication d'un élément de moule pour moule de pneumatique à l'aide d'un dispositif de fabrication du type comprenant une matrice et une contreforme définissant en position fermée une empreinte de moulage.

Le procédé de fabrication comprend les étapes suivantes :
- ouvrir le dispositif de fabrication,
- disposer au moins un insert réalisé par frittage laser contre une surface de moulage de la matrice,
- monter sur la matrice au moins une cale en appui contre ledit insert pour l'immobiliser relativement à la surface de moulage de la matrice,
- fermer le dispositif de fabrication, la contreforme appuyant sur ladite cale dans la position fermée dudit dispositif pour maintenir plaqué ledit insert contre la surface de moulage de la matrice,
- injecter de l'aluminium dans l'empreinte de moulage du dispositif de fabrication,
- ouvrir le dispositif de fabrication,
- extraire hors du dispositif de fabrication l'élément de moule pourvu d'une face de moulage formée au moins par une partie dudit insert et par l'aluminium.

Par « surface de moulage de la matrice », on entend la surface de la matrice qui délimite en partie l'empreinte de moulage du dispositif de fabrication.

Par « face de moulage de l'élément de moule », on entend la face contre laquelle est destiné à venir en contact le pneumatique lors du moulage dans le moule associé, et qui est destinée à mouler tout ou partie de la bande de roulement et/ou de l'un des flancs latéral dudit pneumatique.

On entend par « pneumatique », tous les types de bandages élastiques soumis ou non à une pression interne.

Par « bande de roulement » d'un pneumatique, on entend une quantité de matériau caoutchoutique délimitée par deux surfaces latérales et par deux surfaces principales dont l'une, appelée surface de roulement, est destinée à entrer en contact avec une chaussée lorsque le pneumatique roule. La bande de roulement comprend une pluralité de découpures se prolongeant sur au moins une des surfaces latérales.

Par « flanc » d'un pneumatique, on entend une partie de la surface latérale du pneumatique disposée entre la bande de roulement et un bourrelet de ce pneumatique, débutant à partir des extrémités des découpures de la bande de roulement et se prolongeant jusqu'au bourrelet.

Par « insert réalisé par frittage laser », on entend un insert fabriqué par fusion sélective par laser de poudre, notamment de poudre métallique, construite par superposition de couches fusionnées les unes sur les autres. Cette technique de fabrication est communément nommée SLM (de l'anglais "Sélective Laser Melting"). L'insert peut être réalisé en un matériau tel que l'acier ou un matériau plus résistant que l'aluminium.

Avec le procédé de fabrication tel que défini précédemment, l'élément de moule obtenu comprend au moins un insert définissant une partie de la sculpture et/ou du profil de la partie du pneumatique à mouler qui est en continuité de la partie de la sculpture et/ou du profil formée par le corps en aluminium.

Cet insert est ancré au corps en aluminium lors de la coulée de l'aluminium. Ceci permet l'obtention d'une bonne tenue de l'insert dans l'aluminium injecté.

Par ailleurs, l'immobilisation dudit insert à l'intérieur du dispositif de fabrication par la cale et par l'effort exercé par la contreforme sur cet insert par l'intermédiaire de cette cale permet de s'assurer du bon positionnement de ce dernier après moulage. Pendant l'injection, on évite aussi le passage de l'aluminium entre l'insert et la surface de moulage de la matrice, même avec une injection d'aluminium sous-pression.

Par « injection d'aluminium », il convient d'entendre une injection d'aluminium pur ou une injection d'alliage d'aluminium.

Le ou les inserts permettent de rigidifier l'élément de moule par rapport aux éléments de moule conventionnels réalisés uniquement en aluminium, ce qui améliore la tenue à la cuisson et au nettoyage. Outre la rigidification, l'élément de moule ainsi fabriqué présentera une surface avec une dureté plus importante que les moules conventionnels.

En outre, le ou les inserts étant réalisés par frittage laser, il devient possible de réaliser des motifs ou textures de dimensions très petites sur ces inserts, par exemple faisant contraste par rapport au reste de la face de moulage de l'élément de moule. La réalisation du ou des inserts par frittage laser présente aussi l'avantage de pouvoir prévoir des formes complexes.

Par « texture » sur un insert, on entend une partie de l'insert qui présente des caractéristiques d'état de surface différentes du reste de l'insert et du corps en aluminium. Une telle texture est venue de matière avec l'insert sur laquelle elle est formée, c'est-à-dire réalisée dans le même matériau. La texture peut être obtenue lors de la fabrication additive de l'insert, ou encore obtenue ultérieurement par une opération telle que la gravure au laser, comme mentionné ultérieurement.

Avantageusement, ledit insert peut être réalisé dans un matériau présentant une dureté plus importante que l'aluminium injecté. Dans un mode de mise en oeuvre particulier, la ou les textures sont obtenues lors d'une étape de gravure au laser dudit insert. Alternativement, la ou les textures peuvent être réalisées par d'autres procédés.

Dans un mode de mise en oeuvre particulier, l'étape de gravure au laser est réalisée après une étape de traitement de surface de la face de moulage, notamment par sablage ou par polissage. Plus généralement, l'étape de gravure au laser est réalisée de préférence après toutes les opérations d'usinage de la face de moulage de l'élément de moule.

Ainsi, les opérations d'usinage réalisées post-moulage n'altèrent pas la qualité de l'effet de contraste de la ou des textures formées sur le ou des inserts de l'élément de moule, par gravure laser ou par d'autres procédés, ni la qualité de la géométrie de la texture recherchée.

Dans un autre mode de mise en oeuvre, le ou les inserts montés contre la matrice peuvent être déjà pourvus de textures faisant contraste. Dans ce cas, la ou les textures de chaque insert peuvent être réalisées directement lors de la fabrication additive dudit insert ou encore par une opération préalable de gravure laser par exemple.

La fabrication additive à base de poudre par frittage laser dudit insert est réalisée à l'aide d'une machine de fabrication additive.

Le procédé de fabrication tel que défini précédemment peut comprendre en outre cette étape de fabrication dudit insert, la machine de fabrication additive et le dispositif de fabrication étant disposés successivement sur une même ligne de fabrication.

Alternativement, la fabrication de l'élément de moule peut être réalisée en utilisant un ou des inserts préfabriqués sur une ligne spécifiquement dédiée qui peut par exemple être sur un site de production séparé.

Par ailleurs, le ou les inserts étant réalisés par frittage laser, ils peuvent être prévus avec des formes particulières pour former des moyens favorisant leur ancrage dans l'aluminium injecté.

Le procédé de fabrication peut également comprendre, après l'étape d'extraction hors du dispositif de fabrication, une étape de découpe pour mise en forme finale des dimensions de l'élément de moule et pour obtenir une face de moulage formée exclusivement par ledit insert et par l'aluminium injecté.

Lors de cette étape, on découpe les parties de l'élément de moule qui comprennent une ou des portions de la cale présentes au niveau de la face de moulage de l'élément de moule brut en sortie du dispositif de fabrication.

Dans un mode de mise en oeuvre particulier, ladite cale montée en appui contre ledit insert est réalisée en aluminium. Le fait de réaliser cette cale dans un matériau de la même famille que celui injecté permet, ensuite lors du moulage des pneumatiques dans le moule équipé de l'élément de moule, d'éviter des dilatations thermiques différentielles significatives entre le corps et la cale noyée dans ledit corps. Par ailleurs, lorsqu'une étape de découpe de l'élément de moule est prévue comme indiqué précédemment, ceci facilite cette opération dans la mesure où le corps et la cale ont sensiblement les mêmes caractéristiques de résistance mécanique.

Dans un mode de mise en oeuvre optionnel, dans la position fermée du dispositif de fabrication, des passages sont ménagés axialement entre ladite cale et une surface de moulage de la contreforme. Ceci favorise l'écoulement de l'aluminium injecté à l'intérieur de l'empreinte de moulage du dispositif de fabrication.

Dans un mode de mise en oeuvre particulier, ladite cale est insérée dans des fentes de la surface de moulage de la matrice.

Dans un mode de mise en oeuvre particulier, ledit insert peut être disposé à l'intérieur d'un logement en creux de la surface de moulage de la matrice. Alternativement, ledit insert peut ne pas être disposé à l'intérieur d'un tel logement en creux.

L'invention concerne encore un procédé de fabrication d'un moule pour pneumatique du type comprenant une bande de roulement et deux flancs latéraux, le moule comprenant des première et deuxième coquilles pour le moulage des flancs latéraux du pneumatique, et une pluralité de secteurs répartis dans le sens circonférentiel pour le moulage de la bande de roulement dudit pneumatique.

Le procédé comprend les étapes suivantes : fabriquer au moins un élément de moule selon le procédé de fabrication tel que défini précédemment, et fixer ledit élément de moule fabriqué sur un bloc support du secteur associé, ou de la coquille associée.

La présente invention sera mieux comprise à la lecture de la description détaillée de modes de réalisation pris à titre d'exemples nullement limitatifs et illustrés par les dessins annexés sur lesquels :
[Fig 1] est une vue en perspective partielle d'un dispositif de fabrication d'un élément de moule selon un exemple de réalisation de l'invention,
[Fig 2] est une vue en perspective d'une matrice du dispositif de fabrication de la figure 1,
[Fig 3]

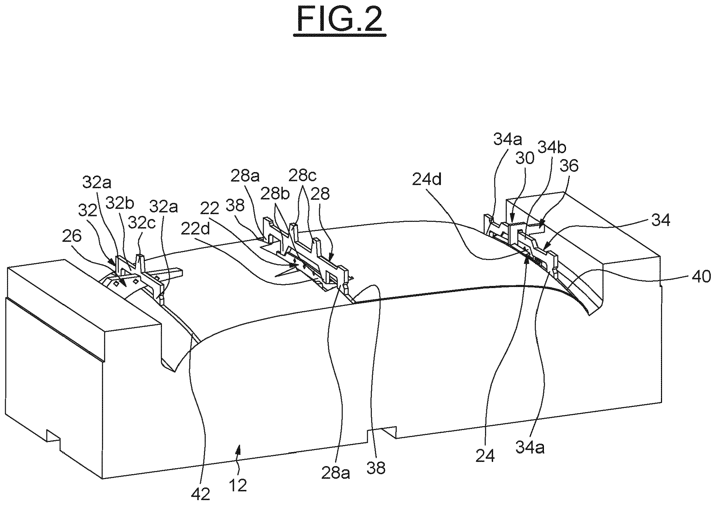

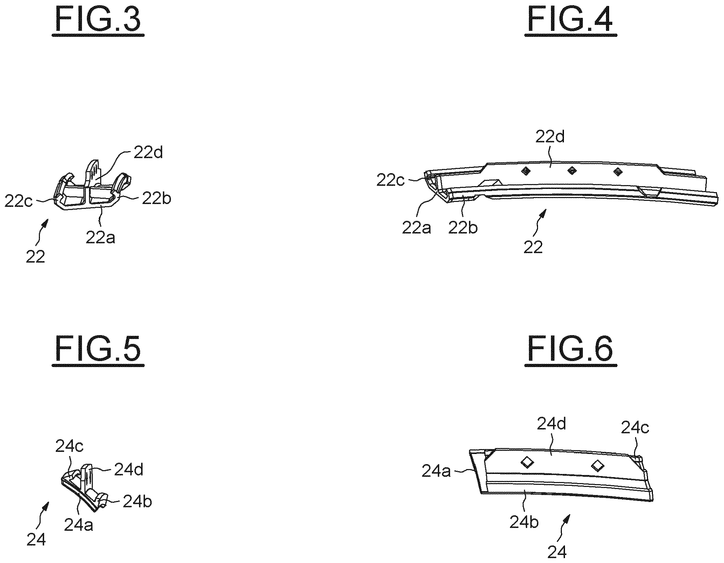

[Fig 4] sont des vues en perspective d'un insert monté contre la matrice de la figure 2,
[Fig 5]
[Fig 6] sont des vues en perspective d'un autre insert monté contre la matrice de la figure 2,

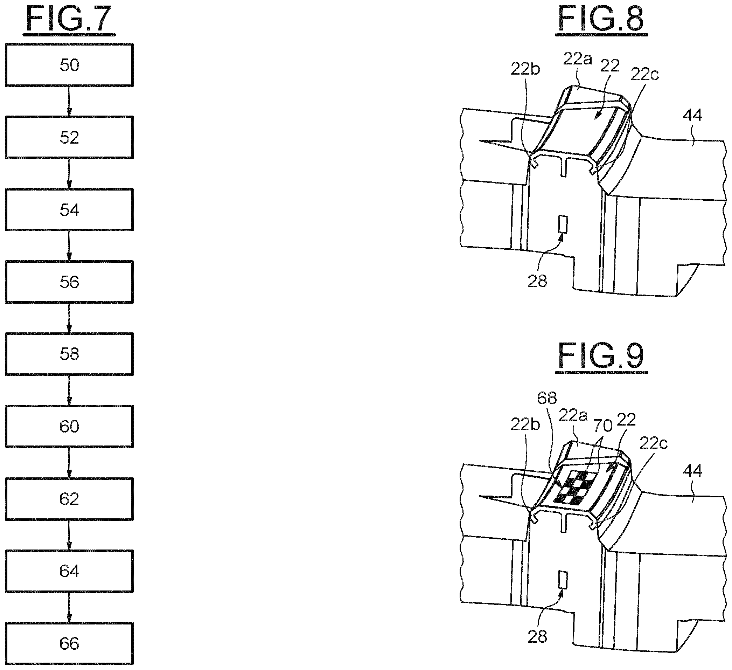

[Fig 7] est un organigramme d'un procédé de fabrication de l'élément de moule selon un exemple de mise en oeuvre de l'invention,
[Fig 8] est une vue en perspective partielle d'un élément de moule selon un exemple de réalisation de l'invention, et
[Fig 9] est une vue en perspective partielle d'un élément de moule selon un autre exemple de réalisation de l'invention.

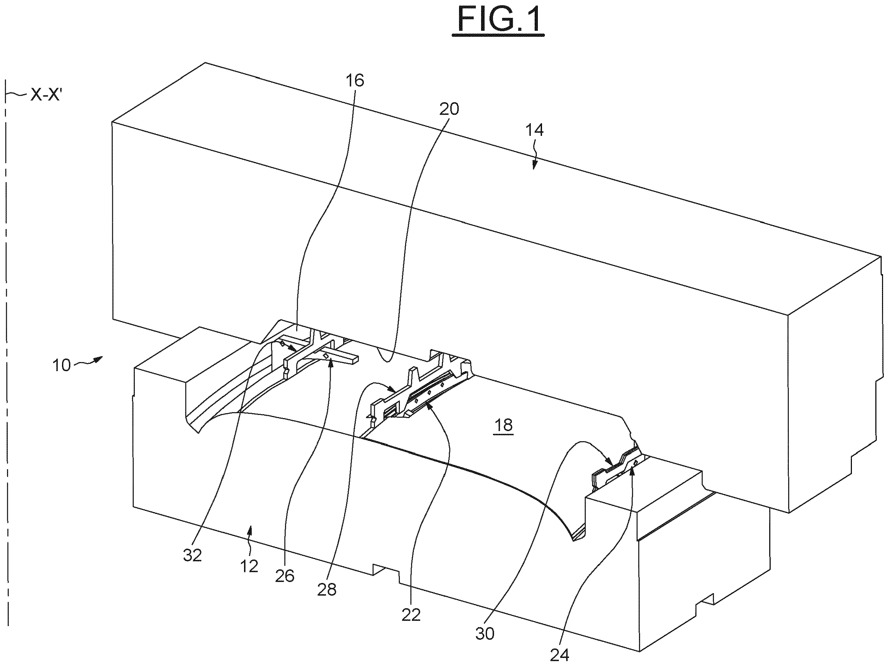

Sur la figure 1, on a représenté partiellement un exemple de réalisation d'un dispositif de fabrication, référencé 10 dans son ensemble, prévu pour le moulage d'un élément de moule destiné à être utilisé dans un moule de cuisson de pneumatiques.

Dans l'exemple de réalisation illustré, le dispositif 10 est conçu de sorte à pouvoir obtenir par moulage un élément de moule permettant ensuite, une fois monté dans le moule de cuisson associé, de former des sculptures dans la bande de roulement des pneumatiques. Dans ce cas, on parle alors d'élément de garniture.

Le dispositif 10 comprend une matrice 12 et une contreforme 14 qui sont chacune fixées sur deux parties (non représentées) d'un outillage mobiles l'une relativement à l'autre entre une position écartée ouverte et une position fermée de moulage selon un axe de déplacement X-X'. Dans la position fermée du dispositif 10, la matrice 12 et la contreforme 14 sont en appui l'une contre l'autre et définissent entre elles une empreinte de moulage 16 de l'élément de moule.

L'empreinte de moulage 16 définit en creux la forme générale de l'élément de moule à obtenir. La matrice 12 comprend une surface de moulage 18 qui délimite en partie l'empreinte de moulage 16. La surface de moulage 18 est en concordance de forme avec la courbure de la partie de la bande de roulement du pneumatique que permettra par la suite de mouler l'élément de moule. La matrice 12 est réalisée en acier.

La contreforme 14 est réalisée en deux parties solidaires, une seule étant visible sur la figure 1 pour des raisons de compréhension. La contreforme 14 comprend une surface de moulage 20, orientée vers la surface de moulage 18 de la matrice, qui délimite également l'empreinte de moulage 16. La contreforme 14 comprend un canal de coulée (non représenté) qui débouche dans l'empreinte de moulage 16 pour permettre son remplissage. Le canal de coulée est ménagé entre les deux parties de la contreforme 14. La contreforme 14 est également réalisée en acier.

En se référant à la fois aux figures 1 et 2, on peut voir que des inserts 22, 24, 26 sont montés en appui contre la surface de moulage 18 de la matrice. Chaque insert 22 à 26 est réalisé en une seule pièce par frittage laser. Sur ces figures, seulement trois inserts ont été représentés pour des raisons de simplicité. Un nombre plus important d'inserts peut bien tendu être prévu.

Comme cela sera décrit plus en détail par la suite, après moulage de l'élément de moule, les inserts 22 à 26 forment en partie la face de moulage dudit élément de moule.

Dans l'exemple de réalisation illustré, l'insert 26 est orienté transversalement aux inserts 22, 24. L'insert 22 est disposé dans une partie centrale de la surface de moulage 18 de la matrice tandis que les inserts 24 et 26 sont disposés dans une partie d'épaule de cette surface de moulage 18. On conçoit que le nombre d'inserts montés contre la matrice 12 ainsi que leur orientation, leur disposition et leur conception dépendent de l'élément de moule que l'on souhaite obtenir.

Comme cela est visible aux figures 3 et 4, dans l'exemple de réalisation illustré, l'insert 22 comprend une partie de base 22a longitudinale et deux branches 22b, 22c latérales recourbées prolongeant chacune une extrémité latérale de la partie de base 22a. Dans la position montée de l'insert 22 contre la matrice 12 illustrée aux figures 1 et 2, la partie de base 22a vient en appui contre la surface de moulage 18 de celle-ci. L'insert 22 comprend également une branche 22d centrale s'étendant à partir de la partie de base 22a et disposée entre les branches 22b, 22c latérales.

Comme cela sera décrit plus en détail par la suite, les branches 22b à 22d favorisent l'ancrage de l'insert 22 lors de l'injection d'aluminium dans l'empreinte de moulage, et la branche 22d permet en outre lors de cette injection de pouvoir maintenir en position ledit insert. Dans l'exemple de réalisation illustré, la branche 22d de l'insert est équipée de trous traversants pour favoriser encore cet ancrage. En variante, il est possible de ne pas prévoir de tels trous.

De façon analogue à l'insert 22 et comme cela est illustré aux figures 5 et 6, l'insert 24 comprend une partie de base 24a longitudinale, deux branches 24b, 24c latérales recourbées prolongeant chacune une extrémité latérale de la partie de base, et une branche 24d centrale s'étendant à partir de ladite partie de base et disposée entre les branches 24b, 24c latérales. Dans l'exemple de réalisation illustré, la branche 24d de l'insert est également équipée de trous traversants. Là aussi, il est possible de ne pas prévoir de tels trous en variante. L'insert 26 se présente quant à lui sous la forme d'une lamelle d'épaisseur sensiblement constante et de forme générale triangulaire.

En se référant de nouveau aux figures 1 et 2, chaque insert 22 à 26 est monté à l'intérieur d'un logement en creux (non référencé) formé sur la surface de moulage 18 de la matrice. Les inserts 22, 24 sont entièrement montés à l'intérieur des logements associés. Les logements en creux pour les inserts 22, 24 sont destinés à former des protubérances sur l'élément de moule qui permettront ensuite de mouler chacune une partie d'une rainure circonférentielle sur le pneumatique en considérant l'axe de rotation de celui-ci. L'insert 26 est monté partiellement à l'intérieur du logement en creux associé. Le logement pour l'insert 26 est destiné à former une protubérance sur l'élément de moule qui permettra ensuite de mouler une partie d'une découpure radiale sur le pneumatique.

Par ailleurs, on peut voir sur les figures 1 et 2 que des cales 28, 30, 32 sont montées sur la matrice 12, chacune de ces cales venant en appui contre un des inserts 22, 24, 26 pour maintenir ledit insert en appui contre le fond du logement associé. Les cales 28, 30, 32 sont réalisées en aluminium, notamment en aluminium pur, et peuvent par exemple être obtenues par moulage ou encore à partir de plaques par un procédé de découpe par laser ou par fil en érosion. Dans l'exemple de réalisation illustré, les cales 28 et 32 sont réalisées en une seule pièce, tandis que la cale 30 est réalisée en deux parties 34, 36 distinctes.

Dans la position fermée du dispositif 10, la contreforme 14 appuie sur chacune des cales 28 à 32 de sorte à plaquer axialement les inserts 22 à 26 contre la surface de moulage 18 de la matrice, en l'espèce ici le fond des logements ménagés sur cette surface de moulage.

Des fentes 38, 40 et 42 sont formées sur la surface de moulage 18 de la matrice pour le montage des cales 28 à 32. Les fentes sont borgnes. Les fentes 38 à 42 sont suffisamment larges pour que les cales 28, 30, 32 puissent être insérées à l'intérieur de celles-ci et suffisamment étroites pour que lesdites cales restent en place après montage et lors de l'injection de l'aluminium. A titre indicatif, le jeu entre les fentes et chaque cale associée peut par exemple être compris entre 0,01 mm et 0,05 mm.

Pour le montage à l'intérieur des fentes 38 à 42 associées de la matrice, chaque cale 28, 30, 32 est pourvue de deux pattes de montage 28a, 34a, 32a venant s'insérer axialement à l'intérieur desdites fentes, de part et d'autre de l'insert 22, 24, 26 associé. La cale 28 est pourvue en outre de deux pattes de blocage 28b axialement en contact contre la branche 22d de l'insert 22. L'espacement entre les pattes de blocage 28b est prévu pour coincer transversalement entre elles une portion tronconique de la branche 22d de l'insert 22. La cale 28 est pourvue en outre de deux pattes d'appui 28c s'étendant vers la contreforme 14 du côté opposé aux pattes de blocage 28b et à l'insert 22. Les pattes d'appui 28c sont espacées dans le sens transversal. Dans la position fermée du dispositif 10, la contreforme 14 appuie axialement sur les pattes d'appui 28c de la cale.

La partie 34 de la cale 30 comprend les deux pattes de montage 34a, et une partie centrale de blocage 34b axialement en contact contre la branche 24d de l'insert 24. La partie centrale de blocage 34b est configurée pour bloquer transversalement la branche 24d de l'insert 22. La partie 36 de la cale 30 s'étend transversalement par rapport à la partie 34. La partie 36 appuie axialement contre la partie 34 du côté opposé à l'insert 24 et latéralement de part et d'autre de cette partie 34. La partie 36 appuie également axialement sur l'insert 24. La partie 36 vient en butée latéralement contre un épaulement de la matrice 12. Dans la position fermée du dispositif 10, la contreforme 14 appuie axialement sur la partie 36 de la cale 30.

La cale 32 est pourvue d'une partie centrale d'appui 32b en contact contre le fond d'une fente de l'insert 26. La cale 32 est pourvue en outre d'une patte d'appui 32c s'étendant vers la contreforme 14 du côté opposé à l'insert 26. Dans la position fermée du dispositif 10, la contreforme 14 appuie axialement sur la patte d'appui 32c de la cale. Dans la position fermée du dispositif 10, compte tenu de la forme particulière des cales 28 à 32, des passages sont ménagés axialement entre chacune de ces cales et la surface de moulage 20 de la contreforme.

En référence à la figure 7 ainsi qu'aux figures 1 et 2, on va maintenant décrire les étapes du procédé de fabrication permettant l'obtention de l'élément de moule à l'aide du dispositif 10 de fabrication.

Dans une première étape référencée 50, le dispositif 10 de fabrication est ouvert pour écarter la matrice 12 et la contreforme 14 l'une de l'autre.

Ensuite, lors d'une deuxième étape 52, on dispose les inserts 22 à 26 en appui contre la surface de moulage 18 de la matrice, en l'espèce contre le fond des logements de cette surface de moulage. Puis, dans une troisième étape 54, on insère les cales 28 à 32 à l'intérieur des fentes 38, 40, 42 de la matrice jusqu'à ce qu'elles viennent en appui contre les inserts 22 à 26 pour les immobiliser.

Ensuite, lors d'une quatrième étape 56, on ferme le dispositif 10 de fabrication pour amener la matrice 12 et la contreforme 14 en appui l'une contre l'autre. Comme indiqué précédemment, dans la position fermée du dispositif 10, la contreforme 14 appuie sur les cales 28 à 32, ce qui a pour effet de maintenir plaqués les inserts 22 à 26 contre la surface de moulage 18 de la matrice.

Puis, lors d'une cinquième étape 58, on injecte de l'aluminium sous pression dans l'empreinte de moulage 16, par exemple un alliage d'aluminium. A titre indicatif, la pression de remplissage de l'aluminium est comprise entre 100 bars et 175 bars.

Lors de cette cinquième étape 58, une fois que l'empreinte de moulage 16 est remplie, on maintient sous pression l'aluminium dans l'empreinte de moulage 16. Ce maintien sous pression est réalisé à l'aide d'un piston (non représenté) servant aussi au remplissage. La pression de maintien dans l'empreinte de moulage peut par exemple être égale à la pression de remplissage.

Lors de l'étape injection, les inserts 22 à 26 et les cales 28 à 32 sont partiellement noyés dans l'aluminium qui remplit l'empreinte de moulage 16. On assure ainsi la solidarisation des inserts 22 à 26 et des cales 28 à 32 avec l'aluminium. Les branches des inserts 22 et 24 favorisent en outre l'ancrage de l'aluminium.

Puis, après refroidissement, l'élément de moule brut qui vient d'être moulé est extrait du dispositif 10 lors d'une sixième étape 60. L'élément de moule brut intègre les inserts 22 à 26 et les cales 28 à 32. La face de l'élément de moule, qui était en contact contre la surface de moulage 18 de la matrice à l'intérieur du dispositif 10 de fabrication, est la face de moulage dudit élément contre laquelle viendra en contact le pneumatique lorsque cet élément de moule sera fixé sur le moule associé. A ce stade, cette face de moulage est formée par le corps en aluminium, les inserts 22 à 26 et les cales 28 à 32.

Ensuite, lors d'une septième étape 62, les faces latérales de l'élément de moule brut sont découpées de sorte que la face de l'élément de moule est formée exclusivement par le corps en aluminium et les inserts 22 à 26 et pour obtenir les dimensions finales de l'élément de moule. Cette étape de découpe peut par exemple être réalisée par électroérosion par fil ou par fraisage, qui représente une alternative plus rapide et moins chère. L'élément de moule obtenu après découpe est illustré partiellement à la figure 8. La face de moulage de l'élément de moule est référencée 44 sur la figure 8.

Dans une variante de mise en oeuvre du procédé, cette étape de découpe de l'élément de moule brut sorti du dispositif 10 pourrait ne pas être prévue. Ceci peut par exemple être le cas lorsque les dimensions de l'empreinte de moulage du dispositif correspondent aux dimensions finales de l'élément de moule, et lorsque les cales 28 à 32 ne viennent pas en appui contre le fond des fentes de la surface de moulage 18 de la matrice de sorte à obtenir pour l'élément de moule sorti du dispositif une face de moulage 44 formée uniquement par le corps en aluminium et les inserts 22 à 26.

Dans une huitième étape 64 du procédé est réalisée une étape de traitement de surface de la face de moulage 44 de l'élément de moule, par exemple par sablage, par polissage, par grenaillage, etc. Cette étape de traitement de surface n'est pas obligatoire dans tous les modes de mise en oeuvre du procédé.

Enfin, dans une neuvième et dernière étape 66 du procédé, il est possible de prévoir une étape d'usinage ou gravure au laser de la partie du ou de chaque insert 22 à 26 qui forme partiellement la face de moulage 44 de l'élément de moule. Cette étape est réalisée à l'aide d'une machine de gravure laser.

Par exemple, comme cela est illustré à la figure 9, il est possible de graver une texture 68 sur la partie de base 22a de l'insert 22 qui fait contraste avec le reste de la face de moulage 44 de l'élément de moule.

Dans l'exemple de réalisation illustré, la texture 68 est composée d'une pluralité de motifs 70 qui présentent une forme extérieure identique, ici rectangulaire, et qui sont disposés sur l'insert 22 de sorte à former un damier avec les parties de l'insert non texturées. Par « motif », on entend une zone de la texture comprenant un agencement de protubérances et/ou de creux formés sur l'insert 22. Cela permet d'obtenir une texture de type "velours".

En variante, il est possible de prévoir d'autres agencements pour la texture. La texture peut par exemple comprendre des lettres, et/ou des signes, et/ou des chiffres notamment pour indiquer des informations techniques du pneumatique. La texture peut également comprendre des informations légales ou distinctives de la marque du pneumatique, etc. Il est également possible de prévoir que la texture entoure une zone en creux de l'insert destinée à obtenir lors du moulage du pneumatique un témoin d'usure.

Comme indiqué précédemment, la texture comprend des protubérances en saillie et/ou des creux formés sur l'insert 22. Les protubérances peuvent par exemple se présenter sous forme de brins, de lamelles, de parallélépipèdes, etc. Les éléments en creux peuvent par exemple se présenter sous la forme de cavités présentant une forme tronconique, circulaire, par exemple des polygonales, en étoile, irrégulières etc. Les éléments en creux peuvent également se présenter sous forme de stries. Les éléments en protubérance et/ou en creux de la texture peuvent être répartis dans celle-ci de manière ordonnée ou non ordonnée, et/ou présenter des formes constantes ou variables, et/ou des profondeurs constantes ou variables.

Comme indiqué précédemment, l'étape de gravure au laser du ou des inserts 22 à 26 au niveau de la face de moulage 44 n'est pas obligatoire. Alternativement, il est possible, lors de l'étape 52, de monter des inserts déjà être pourvus de textures sur la face venant en appui contre sur la face de moulage 18 de la matrice. Cependant, dans ce cas, si une étape de traitement de surface est prévue sur la face de moulage 44 de l'élément de moule en sortie du dispositif 10 de fabrication, l'effet de contraste de la ou des textures peut être altéré. Dans un autre mode de mise en oeuvre, il est aussi possible de fabriquer un élément de moule comprenant des inserts dépourvus de texture(s) sur la face de moulage 44.

Dans le procédé de fabrication qui vient d'être décrit, celui-ci débute par l'ouverture du dispositif de fabrication et le montage des inserts. Dans un autre mode de mise en oeuvre, le procédé de fabrication peut débuter avec une étape de fabrication du ou des inserts par frittage laser.

L'invention a été décrite sur la base d'un élément de moule prévu pour le moulage de la bande de roulement du pneumatique. Comme indiqué précédemment, il est également possible sans sortir du cadre de l'invention de prévoir ce type d'élément de moule pour le moulage d'une partie d'un des flancs, ou des deux flancs, du pneumatique.

## Revendications

1. Procédé de fabrication d'un élément de moule pour moule de pneumatique à l'aide d'un dispositif de fabrication du type comprenant une matrice (12) et une contreforme (14) définissant en position fermée une empreinte de moulage, **caractérisé en ce qu'**il comprend les étapes suivantes :
- ouvrir le dispositif de fabrication,
- disposer au moins un insert (22) réalisé par frittage laser contre une surface de moulage (18) de la matrice,
- monter sur la matrice au moins une cale (28) en appui contre ledit insert pour l'immobiliser relativement à la surface de moulage de la matrice,
- fermer le dispositif de fabrication, la contreforme (14) appuyant sur ladite cale (28) dans la position fermée dudit dispositif pour maintenir plaqué ledit insert (22) contre la surface de moulage de la matrice,
- injecter de l'aluminium dans l'empreinte de moulage du dispositif de fabrication,
- ouvrir le dispositif de fabrication,
- extraire hors du dispositif de fabrication l'élément de moule pourvu d'une face de moulage formée au moins par une partie dudit insert et par l'aluminium.

2. Procédé selon la revendication 1, dans lequel ladite cale (28) montée en appui contre ledit insert est réalisée en aluminium.

3. Procédé selon la revendication 1 ou 2, dans lequel, dans la position fermée du dispositif de fabrication, des passages sont ménagés axialement entre ladite cale (28) et une surface de moulage (20) de la contreforme.

4. Procédé selon l'une quelconque des revendications précédentes, dans lequel ladite cale (28) est insérée dans des fentes (38) de la surface de moulage de la matrice.

5. Procédé selon l'une quelconque des revendications précédentes, dans lequel ledit insert (22) est réalisé dans un matériau présentant une dureté plus importante que l'aluminium injecté.

6. Procédé selon l'une quelconque des revendications précédentes, comprenant, après l'étape d'extraction hors du dispositif de fabrication, une étape de réalisation sur ledit insert d'au moins une texture faisant contraste par rapport au reste de la face de moulage, notamment par gravure au laser.

7. Procédé selon l'une quelconque des revendications précédentes, comprenant, après l'étape d'extraction hors du dispositif de fabrication, une étape de découpe pour mise en forme finale des dimensions de l'élément de moule et pour obtenir une face de moulage formée exclusivement par ledit insert et par l'aluminium injecté.

8. Procédé selon l'une quelconque des revendications précédentes, comprenant, après l'étape d'extraction hors du dispositif de fabrication, au moins une étape de traitement de surface de la face de moulage de l'élément de moule, notamment par sablage ou par polissage.

9. Procédé selon la revendication 8, comprenant, après ladite étape de traitement de surface, une étape de réalisation sur ledit insert d'au moins une texture faisant contraste par rapport au reste de la face de moulage, notamment par gravure au laser.

10. Procédé selon l'une quelconque des revendications précédentes, dans lequel la face dudit insert disposée contre la surface de moulage de la matrice est pourvue d'une texture faisant contraste par rapport au reste de ladite face.

11. Procédé selon la revendication 6 ou 9 ou 10, dans lequel ladite texture comprend une pluralité d'éléments en protubérance et/ou en creux par rapport à la face de moulage.

12. Procédé selon l'une quelconque des revendications précédentes, dans lequel ledit insert (22) disposé contre la surface de moulage de la matrice comprend des moyens d'ancrage (22b, 22c, 22d) configurés pour ancrer ledit insert dans l'aluminium injecté.

13. Procédé selon l'une quelconque des revendications précédentes, dans lequel ledit insert (22) est disposé à l'intérieur d'un logement en creux de la surface de moulage de la matrice.

14. Procédé selon l'une quelconque des revendications précédentes, comprenant une étape de fabrication dudit insert par frittage laser à l'aide d'une machine de fabrication additive, ladite machine et le dispositif de fabrication étant disposés successivement sur une même ligne de fabrication.

15. Procédé de fabrication d'un moule pour pneumatique du type comprenant une bande de roulement et deux flancs latéraux, le moule comprenant des première et deuxième coquilles pour le moulage des flancs latéraux du pneumatique, et une pluralité de secteurs répartis dans le sens circonférentiel pour le moulage de la bande de roulement dudit pneumatique, le procédé comprenant les étapes suivantes :
- fabriquer au moins un élément de moule selon le procédé de fabrication selon l'une quelconque des revendications 1 à 14, et
- fixer ledit élément de moule fabriqué sur un bloc support du secteur associé, ou de la coquille associée.

## Patentansprüche

1. Verfahren zur Fertigung eines Formelements für eine Reifenform mit Hilfe einer Fertigungsvorrichtung des Typs, der eine Matrize (12) und eine Gegenform (14) umfasst, die in geschlossener Position ein Formnest definieren, **dadurch gekennzeichnet, dass** es die folgenden Schritte umfasst:
- Öffnen der Fertigungsvorrichtung,
- Anordnen mindestens eines durch Lasersintern hergestellten Einsatzes (22) an einer Formfläche (18) der Matrize,
- Montieren mindestens eines Keils (28) an der Matrize, der am Einsatz anliegt, um ihn relativ zur Formfläche der Matrize zu fixieren,
- Schließen der Fertigungsvorrichtung, wobei die Gegenform (14) in der geschlossenen Position der Vorrichtung gegen den Keil (28) drückt, um den Einsatz (22) gegen die Formfläche der Matrize gedrückt zu halten,
- Einspritzen von Aluminium in das Formnest der Fertigungsvorrichtung,
- Öffnen der Fertigungsvorrichtung,
- Entnehmen des Formelements, das mit einer Formfläche versehen ist, die zumindest durch einen Teil des Einsatzes und durch das Aluminium gebildet ist, aus der Fertigungsvorrichtung.

2. Verfahren nach Anspruch 1, wobei der an den Einsatz anliegend montierte Keil (28) aus Aluminium hergestellt ist.

3. Verfahren nach Anspruch 1 oder 2, wobei in der geschlossenen Position der Fertigungsvorrichtung zwischen dem Keil (28) und einer Formfläche (20) der Gegenform Durchgänge gebildet sind.

4. Verfahren nach einem der vorangehenden Ansprüche, wobei der Keil (28) in Schlitze (38) der Formfläche der Matrize eingeführt wird.

5. Verfahren nach einem der vorangehenden Ansprüche, wobei der Einsatz (22) aus einem Material hergestellt ist, das eine größere Härte als das eingespritzte Aluminium aufweist.

6. Verfahren nach einem der vorangehenden Ansprüche, das nach dem Schritt des Entnehmens aus der Fertigungsvorrichtung einen Schritt umfasst, bei dem auf dem Einsatz mindestens eine Textur erzeugt wird, die einen Kontrast zum Rest der Formfläche bildet, insbesondere durch Lasergravur.

7. Verfahren nach einem der vorangehenden Ansprüche, das nach dem Schritt des Entnehmens aus der Fertigungsvorrichtung einen Schneideschritt zum endgültigen Informbringen der Abmessungen des Formelements und zum Erhalten einer Formfläche, die ausschließlich durch den Einsatz und durch das eingespritzte Aluminium gebildet ist, umfasst.

8. Verfahren nach einem der vorangehenden Ansprüche, das nach dem Schritt des Entnehmens aus der Fertigungsvorrichtung mindestens einen Schritt der Oberflächenbehandlung der Formfläche des Formelements, insbesondere durch Sandstrahlen oder Polieren, umfasst.

9. Verfahren nach Anspruch 8, das nach dem Schritt der Oberflächenbehandlung einen Schritt umfasst, bei dem auf dem Einsatz mindestens eine Textur erzeugt wird, die einen Kontrast zum Rest der Formfläche bildet, insbesondere durch Lasergravur.

10. Verfahren nach einem der vorangehenden Ansprüche, wobei die an der Formfläche der Matrize angeordnete Seite des Einsatzes mit einer Textur versehen ist, die einen Kontrast zum Rest der Seite bildet.

11. Verfahren nach Anspruch 6 oder 9 oder 10, wobei die Textur mehrere in Bezug auf die Formfläche vorstehende und/oder vertiefte Elemente umfasst.

12. Verfahren nach einem der vorangehenden Ansprüche, wobei der an der Formfläche der Matrize angeordnete Einsatz (22) Verankerungsmittel (22b, 22c, 22d) umfasst, die so konfiguriert sind, dass sie den Einsatz im eingespritzten Aluminium verankern.

13. Verfahren nach einem der vorangehenden Ansprüche, wobei der Einsatz (22) innerhalb einer hohlen Aufnahme der Formfläche der Matrize angeordnet ist.

14. Verfahren nach einem der vorangehenden Ansprüche, umfassend einen Schritt des Herstellens des Einsatzes durch Lasersintern mit Hilfe einer Maschine zur additiven Fertigung, wobei die Maschine und die Fertigungsvorrichtung auf derselben Fertigungslinie hintereinander angeordnet sind.

15. Verfahren zur Fertigung einer Form für einen Reifen des Typs, der einen Laufstreifen und zwei Seitenflanken umfasst, wobei die Form eine erste und eine zweite Schale zum Formen der Seitenflanken des Reifens und mehrere in Umfangsrichtung verteilte Sektoren zum Formen des Laufstreifen des Reifens umfasst, wobei das Verfahren die folgenden Schritte umfasst:
- Fertigen mindestens eines Formelements nach dem Fertigungsverfahren nach einem der Ansprüche 1 bis 14 und
- Befestigen des gefertigten Formelements an einem Stützblock des zugehörigen Sektors bzw. der zugehörigen Schale.

## Claims

1. Method for manufacturing a mould element for a tyre mould using a manufacturing device of the type comprising a die (12) and a counter-mould (14) defining a moulding cavity in the closed position, **characterized in that** it comprises the following steps:
- opening the manufacturing device;
- placing at least one insert (22), produced by laser sintering, against a moulding surface (18) of the die;
- mounting at least one wedge (28) on the die so as to bear against said insert in order to immobilise it relative to the moulding surface of the die;
- closing the manufacturing device, the counter-mould (14) pressing onto said wedge (28) in the closed position in order to keep said insert (22) pressed against the moulding surface of the die;
- injecting aluminium into the moulding cavity of the manufacturing device;
- opening the manufacturing device;
- extracting from the manufacturing device the mould element provided with a moulding face formed by at least part of said insert and by the aluminium.

2. Method according to Claim 1, wherein said wedge (28) mounted so as to bear against said insert is made of aluminium.

3. Method according to Claim 1 or 2, wherein, in the closed position of the manufacturing device, axial passages are arranged between said wedge (28) and a moulding surface (20) of the counter-mould.

4. Method according to any of the preceding claims, wherein said wedge (28) is inserted in slots (38) in the moulding surface of the die.

5. Method according to any of the preceding claims, wherein said insert (22) is made of a material with a greater hardness than the injected aluminium.

6. Method according to any of the preceding claims, comprising, after the step of extraction from the manufacturing device, a step of production on said insert of at least one texture forming a contrast with respect to the rest of the moulding face, in particular by laser engraving.

7. Method according to any of the preceding claims, comprising, after the step of extraction from the manufacturing device, a step of cutting in order to finally establish the dimensions of the mould element and in order to obtain a moulding face formed exclusively by said insert and by the injected aluminium.

8. Method according to any of the preceding claims, comprising, after the step of extraction from the manufacturing device, at least one step of surface treatment of the moulding face of the mould element, in particular by sanding or polishing.

9. Method according to Claim 8, comprising, after said step of surface treatment, a step of producing on said insert at least one texture forming a contrast with respect to the rest of the moulding face, in particular by laser engraving.

10. Method according to any of the preceding claims, wherein the face of said insert arranged against the moulding surface of the die is provided with a texture forming a contrast with respect to the rest of said face.

11. Method according to Claim 6 or 9 or 10, wherein said texture comprises a plurality of elements which protrude and/or are recessed relative to the moulding face.

12. Method according to any of the preceding claims, wherein said insert (22) arranged against the moulding surface of the die comprises anchoring means (22b, 22c, 22d) which are configured so as to anchor said insert in the injected aluminium.

13. Method according to any of the preceding claims, wherein said insert (22) is arranged inside a housing which is recessed from the moulding surface of the die.

14. Method according to any of the preceding claims, comprising a step of production of said insert by laser sintering using an additive manufacturing machine, said machine and the manufacturing device being arranged successively on a same production line.

15. Method of manufacturing a mould for a tyre of the type comprising a tread and two side walls, the mould comprising first and second shells for moulding the side walls of the tyre, and a plurality of sectors distributed in the circumferential direction for moulding the tread of said tyre, the method comprising the following steps:
- manufacturing at least one mould element using the manufacturing method according to any of claims 1 to 14, and
- fixing said manufactured mould element on a support block of the associated sector or the associated shell.
